# EUROPEAN PATENT APPLICATION

(11) **EP 2 656 962 A2**
(43) Date of publication of application: **30.10.2013**
(21) Application number: 13164016.1
(22) Date of filing: 16.04.2013
(51) Int. Cl.: B23K 28/00

(54) **Remote melt joining methods and remote melt joining systems**

(30) Priority: 23.04.2012 US 201213453097
(71) Applicant: General Electric Company, Schenectady, New York 12345 (US)
(72) Inventor: Cretegny, Laurent, Niskayuna, NY 12309 (US); Ritter Ann Melinda, Niskayuna, NY 12309 (US); Rasch Lyle Timothy, Cincinnati, OH 45215 (US); Zabala Robert John, Niskayuna, NY 12309 (US); Schoonover Jeffrey Jon, Niskayuna, NY 12309 (US); Meyer, Mark Kevin, Cincinnati, OH 45215 (US)
(74) Representative: Cleary, Fidelma

(57) **Abstract**

Remote melt joining methods include melting a filler material (211) to produce a molten filler material, wherein melting the filler material (211) occurs at a remote distance away from a target site (112) of a substrate material (110) such that melting the filler material (211) maintains the target site (112) of the substrate material (110) below its solidus temperature, and, delivering the molten filler material to the target site (112) of the substrate material (110) in a continuous stream.

## Description

The subject matter disclosed herein relates to joining materials and, more particularly, repairing high temperature performance alloys.

Metal and alloy parts may experience various wear instances as a result of application fatigue. For example, cracking, abrasions, erosion or a variety of other acts may cause the removal or wear of original substrate material. To repair the worn parts, filler material may be added (e.g., welded) to fill in cracks, patch abrasions or otherwise replace material lost to erosion. Likewise, filler material may also be used when joining multiple metal or alloy parts together for a variety of applications. To provide strong uniform mechanical properties across the repaired and/or joined parts, filler material that is the same as, or substantially similar to, the substrate material can be used.

However, high temperature performance alloys (such as nickel and cobalt based super alloys used in hot gas path components of gas turbine parts) have high melting temperatures that require a significant application of energy before they can be applied to the original substrate material. As a result, the large amount of radiant heat produced by a welding apparatus used to melt such filler materials can also affect the nearby substrate material. For example, the impingement of the welding apparatus's radiant heat can cause slumping, melting or other changes to the microstructure of the original substrate material. These changes in the substrate material can reduce the original component's strength, toughness and/or other physical characteristics. While other filler materials with lower melting temperatures may alternatively be used, they may provide lower performance at high temperatures and/or possess mechanical properties that are increasingly different than the mechanical properties of the original substrate material.

Accordingly, alternative joining methods and apparatuses would be welcome in the art.

In one aspect, the invention resides in a remote melt joining method. The remote melt joining method includes melting a filler material to produce a molten filler material, wherein melting the filler material occurs at a remote distance away from a target site of a substrate material such that melting the filler material maintains the target site of the substrate material below its solidus temperature, and, delivering the molten filler material to the target site of the substrate material in a continuous stream.

In another aspect, the invention resides in a remote melt joining system for remotely melting a filler material and delivering it to a target site of a substrate material in a continuous stream. The remote melt joining system includes a remote storage and delivery vessel having a container fluidly connected to a delivery feed, wherein the delivery feed comprises an opening large enough for a continuous stream of molten filler material to pass there through. The remote melt joining system further includes a remote melting apparatus that melts the filler material in the container at a remote distance away from the substrate material such that it maintains the substrate material below its solidus temperature.

These and additional features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary remote melt joining method according to one or more embodiments shown or described herein;
FIG. 2 is a schematic illustration of a remote melt joining system according to one or more embodiments shown or described herein;
FIG. 3 is a schematic illustration of the remote melt joining system of FIG. 2 melting the filler material according to one or more embodiments shown or described herein;
FIG. 4 is a schematic illustration of the remote melt joining system of FIGS. 2 and 3 delivering the molten filler material to a substrate material according to one or more embodiments shown or described herein; and,
FIG. 5 is a micrograph of two pieces of substrate material joined by filler material using one or more of the embodiments shown or described herein.

Remote melt joining methods disclosed herein generally comprise melting a filler material at a remote distance away from a target site of a substrate material such that the melting of the filler material does not cause the target site of the substrate material to rise above its solidus temperature, but instead maintains the substrate material below its solidus temperature. The molten filler material is then delivered to the target site of the substrate material in a continuous stream. The remote melting of the filler material and its delivery via a continuous stream can reduce or eliminate the use of melting point suppressants in the filler material while also reducing the amount of excessive heat imparted on the original substrate material.

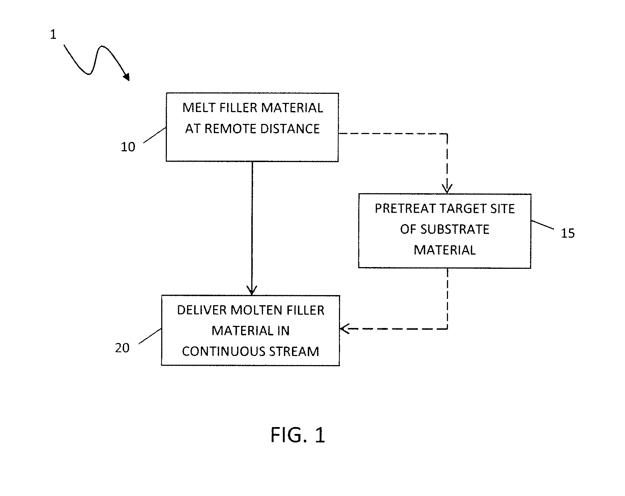

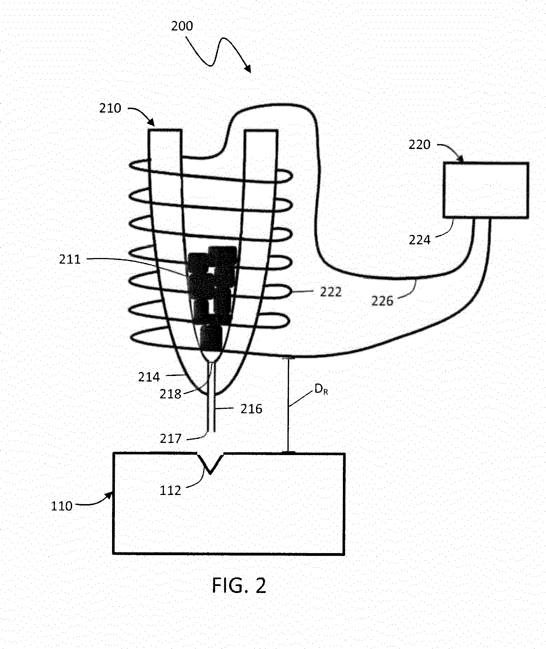

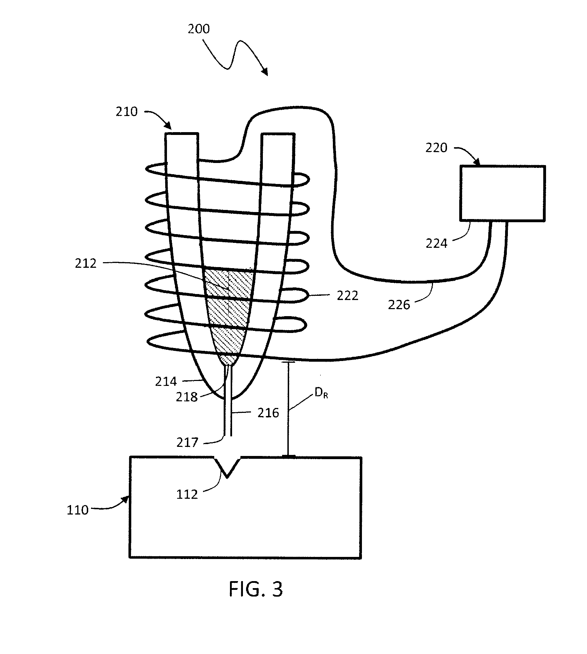

With reference to FIGS. 1-3, an exemplary remote melt joining method 1 is illustrated that can be incorporated into various remote melt joining systems such as the exemplary remote melt joining system 200 illustrated in FIGS. 2 and 3.

As exemplarily illustrated in FIGS. 2 and 3, the remote melt joining system 200 may generally be utilized for adding filler material 211 to a target site 112 of a substrate material 110. The substrate material 110 can comprise any type of material that can have molten filler material 212 applied (i.e., contacted and subsequently bonded) to it at one or more locations. For example, the substrate material 110 may comprise any metal, alloy, or other material that is capable of bonding with a filler material 211 when the filler material 211 is in a molten state from an application of energy such as heat. In some exemplary embodiments, the substrate material 110 may comprise a nickel based superalloy such as those used in gas turbines for hot gas path applications. For example, in some embodiments the substrate may comprise the commercially available Renè^{™} N5 alloy.

The substrate material 110 may comprise any dimensions and geometry that allow for the application of molten filler material 212 in a continuous stream to a target site 112 as will become appreciated herein. For example, in some embodiments, such as that illustrated in FIGS. 2 and 3, the substrate material 110 may comprise a relatively flat repair surface with a void at the target site 112. The void may be present from various application fatigue such as cracking, rubbing, abrasions, erosion or any other act that may cause the removal or wear of substrate material 110. In other embodiments, the substrate material 110 may comprise curves, corners, arms, joints or any other type of shape such as those that may be present in a bucket for a gas turbine. Furthermore, the target site 112 of the substrate material 110 may comprise any location where filler material is to be added. For example, the target site 112 may comprise a joint between multiple pieces or any other location on a substrate material 110.

Still referring to FIGS. 2 and 3, the remote melt joining system 200 comprises a remote storage and delivery vessel 210 and a remote melting apparatus 220. The remote melt joining system 200 is disposed at a remote distance D_{R} away from the target site 112 of the substrate material 110. As used herein, "remote distance" comprises any distance between the target site 112 and the remote melt joining system 200 (and in particular the remote melting apparatus 220 and any molten filler material 212 in the delivery vessel 210) that is large enough such that the target site 112 does not rise above its solidus temperature as a result of the radiant energy from either the remote melting apparatus 220 or any molten filler material 212 as will become appreciated herein.

The remote storage and delivery vessel 210 holds a filler material 211 that is to be welded onto the substrate material 110. The filler material 211 can comprise any material that can be heated to a state above its liquidus temperature such that it melts and can be applied to the substrate material 110 in a continuous stream as will become appreciated herein. In some embodiments, the filler material 211 can comprise a common material. As used herein, "common material" refers to a material that is either the same as or similar in composition to the substrate material 110. Such embodiments may allow for less shrinkage, cracking or other performance defects by having the substrate material 110 and the filler material 211 possess the same or similar physical characteristics. Furthermore, such embodiments can also provide a closer match of physical properties between the substrate material 110 and the filler material 211 to potentially allow for increased and more predictable performance. In some embodiments, such as where the substrate material 110 comprises a single crystal, a material that is similar but not the same in composition to the substrate material 110 may be used due to gran boundaries at the target site 112. For example, when the substrate material 110 comprises a single crystal Renè^{™} N5, the filler material may comprise Renè^{™} 142.

Similar to the substrate material 110, the filler material 211 may comprise any dimensions and geometry that allow for the filler material 211 to be heated to a temperature greater than its liquidus temperature such that molten filler material 212 can be applied in a continuous stream to the substrate material 110. For example, in some embodiments, such as that illustrated in FIGS. 2 and 3, the filler material 211 may comprise one or more ingots that can be placed in the remote storage and delivery vessel 210. In other embodiments, the filler material 211 may comprise other configurations such as pellets, rods, blocks, wires or any other size and/or shape.

The remote storage and delivery vessel 210 can comprise any device that can at least temporarily store the molten filler material 212 and selectively deliver it to the target site 112 of the substrate material 110 in a continuous stream. For example, in some embodiments, such as that illustrated in FIGS. 2 and 3, the remote storage and delivery vessel 210 may comprise a container 214 fluidly connected to a delivery feed 216. The container 214 may comprise any device that can hold molten filler material 212 prior to being delivered to the substrate material 110. For example, in some embodiments, the container 214 may comprise a crucible. The crucible may be made of quartz, refractory ceramics or a metallic cold hearth. In other embodiments, the container 214 may comprise any other material that can store the molten filler material 212.

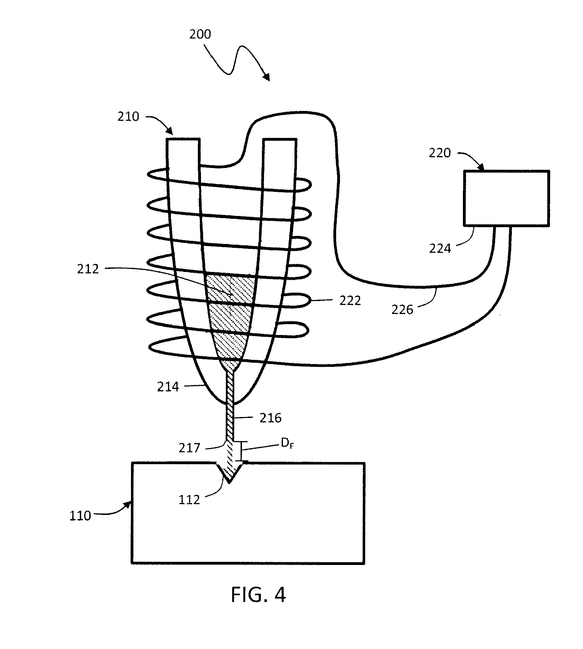

Likewise, the delivery feed 216 can comprise any device that can facilitate the transport of the molten filler material 212 from the container 214 to the target site 112 of the substrate material 110 in a continuous stream. The delivery feed 216 can further prevent the loss of excess heat from the molten filler material 212 and also prevent contamination from contact with the delivery feed 216 and/or the atmosphere. For example, in some embodiments the delivery feed 216 can comprise a tube, conduit, spout or other apparatus that directs the flow of molten filler material 212 from the container 214 to the target site 112. The delivery feed 216 may comprise the same material as the container 214 or may comprise alternative or additional materials from the container 214 in a continuous stream. The delivery feed 216 can further comprise an opening 217 where the molten filler material 212 can eventually exit when it is delivered to the substrate material as will become appreciated herein. The opening 217 can comprise any diameter that allows for a continuous stream of molten filler material 212 to pass there through such as between about 0.125 mm and 3.8 mm, between about 0.5 mm and about 1.5 mm or about 1 mm. Moreover, the opening 217 can be any flow distance (D_{F} in FIG. 4) from the substrate that allows for a continuous stream of molten filler material 212 to be applied, such as less than about 50 mm, less than about 35 mm, or less than about 25 mm.

In some embodiments, to prevent the premature release of molten filler material 212 to the target site 112 of the substrate material 110, the remote melt joining system 200 may further comprise one or more gates 218, plugs, or other flow control mechanisms that control when the molten filler material 212 is delivered to the target site 112. For example, in some embodiments a gate 218 may be integrated between the container 214 and the delivery feed 216 (as illustrated in FIG. 2) or at the opening 217 of the delivery feed 216. The mechanical gating system may transition between a closed position that keeps the molten filler material 212 contained (as seen in FIG. 2) and an open position that releases the molten filler material 212 (as seen in FIG. 3). In other embodiments, a plug (not shown) may be disposed between the container 214 and the delivery feed 216 or at the opening 217 of the delivery feed 216. The plug may comprise a removable substrate that is pulled away when the molten filler material 212 is to be released, or may comprise a metal or other material that melts at an elevated temperature that is reached with the filler material 211 is heated into the molten filler material 212. In some embodiments, the container 214 and/or the delivery feed 216 may comprise a small orifice that requires an overpressure over the molten filler material 212 before the molten filler material 212 is passed through. In such embodiments, the molten filler material may potentially be released in a plurality of intervals. While multiple flow control systems have been presented herein, it should be appreciated that these are exemplary only and other flow control systems such as pressure differentials and electromagnetic fields may additionally or alternatively be incorporated.

As discussed above, in addition to the remote storage and delivery vessel 210, the remote melt joining system 200 further comprises a remote melting apparatus 220. Still referring to FIGS. 2 and 3, the remote melting apparatus 220 can comprise any apparatus that can apply enough energy (e.g., heat) to a filler material 211 such that it is heated above its liquidus temperature so that it becomes molten filler material 212 that can be applied to the target site 212 of the substrate material. For example, in some embodiments, such as that illustrated in FIGS. 2 and 3, the remote melting apparatus 220 can comprise an induction heating apparatus comprising a power supply 224 connected to an induction coil 222 via an electrical connection 226. In such embodiments, the power supply 224 can provide an electric current to the induction coil 222 through the electrical connection 226. The induction coil 222 can be disposed in any operable configuration near or around the container 214 and the delivery feed 216. When the electric current is provided to the induction coil 222, the induction coil 222 produces an electromagnetic field to heat the neighboring work piece through resistive heating from the electromagnetic induction. It should be appreciated that while the remote melting apparatus 220 is exemplarily illustrated as an induction heating apparatus, the remote melting apparatus 220 may alternatively or additionally comprise any other type of remote melting apparatus 220 such as, for example, an arc welding apparatus (e.g., TIG welding), gas welding apparatus (e.g., oxyacetylene welding), energy beam welding apparatus (e.g., laser beam welding), a microwave and/or any other alternative heating apparatus capable of heating the filler material 211 above its liquidus temperature. Furthermore, it should be appreciated that the remote melt joining system 200 illustrated in FIGS. 2-4 is exemplarily only and other variations may also be realized. For example, the remote storage and delivery vessel 210 and the remote melting apparatus 220 can comprise other shapes, sizes, relative placements, or any other variation on the exemplarily illustrated schematic.

Referring now to FIGS. 1-3, the remote melt joining method 1 can be incorporated into various remote melt joining systems 200 such as those discussed above. The remote melt joining method 1 generally comprises melting the filler material 211 into molten filler material 212 at a remote distance D_{R} in step 10 and then delivering the molten filler material 212 in a continuous stream to the target site 112 of the substrate material 110 in step 20. The remote melt joining method 1 may option comprise additional pretreatments (e.g., preheating, cleaning, etc.) of the target site 112 in step 15 prior to delivering the molten filler material 212 in step 20. The remote melt joining method 1 will be discussed in more detail with reference to the exemplary remote melt joining system 200.

As discussed above, the remote melt joining method 1 first comprises melting the filler material 211 into molten filler material 212 at a remote distance D_{R} in step 10. Melting the filler material 211 in step 10 can comprise disposing the remote melting apparatus 220 adjacent the filler material 211 and heating the filler material 211 to a temperature above its liquidus temperature.

Melting the filler material 211 in step 20 may be accomplished utilizing a variety of remote melting apparatuses 220 as discussed above by applying energy to the filler material 211 to produce molten filler material 212. For example, as illustrated in FIGS. 2 and 3, the remote melting apparatus 220 can comprise an induction heating apparatus such that the filler material 211 can be heated to a temperature above its liquidus temperature via the induction coil 222. However, as also discussed above, various other remote melting apparatuses 220 may alternatively be utilized to melt the filler material 211 in step 10 such as arc welding apparatuses (e.g., TIG welding), gas welding apparatuses (e.g., oxyacetylene welding), energy beam welding apparatuses (e.g., laser beam welding) and/or any other alternative welding apparatuses capable of heating the filler material 211 above its liquidus temperature.

In some embodiments, melting the filler material 211 may comprise superheating the filler material 211 to a temperature exceeding its liquidus temperature. Such embodiments may ensure the molten filler material 212 flows throughout and completely fills the target site 112 (e.g., a gap or crack) of the substrate material 110 prior to cooling and solidifying as should be appreciated herein.

Furthermore, melting the filler material 211 in step 20 is performed at a remote distance D_{R} from the target site 112 of the substrate material. As discussed above, the remote distance D_{R} comprises any distance between the target site 112 and the remote melt joining system 200 (and in particular the remote melting apparatus 220 and any molten filler material 212 in the delivery vessel 210) that is large enough that the target site 112 does not rise above its solidus temperature as a result of the radiant energy from either the remote melting apparatus 220 or any molten filler material 212. In some embodiments, the remote distance D_{R} may be large enough that the target site 112 does not rise above its recrystallization temperature as a result of the radiant energy from either the remote melting apparatus 220 or any molten filler material 212. The remote distance D_{R} may thereby depend, for example, on the amount of energy applied to the filler material 211 from the remote melting apparatus 220, the amount of time energy is applied to the filler material 211, the material of the target site 112, the amount of energy radiating from any molten filler material 212 and/or any insulating barriers between the remote melt joining system 200 and the target site 110. In some embodiments, some radiant energy from either the remote melting apparatus 220 and/or any molten filler material 212 may heat the target site 112 to a temperature below its solidus temperature. In such embodiments, such heating may be taken into account when potentially preheating the target site as discussed below.

Additionally, melting the filler material 211 in step 10 may be performed in a variety of environments. For example, in some embodiments, the melting of the filler material 211 in step 10 may occur in an inert atmosphere. In some embodiments, the melting of the filler material 211 in step 10 may occur in a low pressure (e.g., vacuum) environment. In some embodiments, the melting of the filler material 211 in step 10 may occur in any other type of environment that allows for the melting of the filler material 211 to produce molten filler material 212 for the subsequent delivery to the target site 112 substrate material 110.

Still referring to FIGS. 1-3, in some embodiments, the remote melt joining method 1 optionally comprises pretreating the target site 112 of the substrate material 110 prior to delivering the molten filler material 212 in a continuous stream in step 20. Pretreating the target site of the substrate material in step 15 can occur prior to, simultaneously with, or subsequent to (or combinations thereof) melting the filler material 211 in step 10.

Preheating the target site 112 of the substrate material 110 in step 15 can comprise preheating the target site 112 to a preheat temperature that is above room temperature but below the solidus temperature of the target site 112. Preheating the target site 112 my, among other things, help prevent the premature cooling or solidification of the molten filler material 212 when it is applied to the target site 112 of the substrate material and/or reduce residual stress present at or around the target site 112.

The preheating of the target site 112 in step 15 may be accomplished by a variety of heating methods such as an induction coil, furnace, laser or any other apparatus that can provide energy to the target site 112. In some embodiments, the same remote melting apparatus 220 used to melt the filler material 211 in step 10 may also be used to preheat the target site 112 in step 15. For example, a common induction coil may transition between the target site 112 and the remote storage and delivery vessel 210 (or the container 214 specifically) holding the filler material 211 so long as the target site does not rise above, but is instead maintained below its solidus temperature prior to the delivery of the molten filler material 212 in step 20.

In some embodiments, the temperature of the target site 112 of the substrate material 110 may be monitored via one or more temperature sensors such as thermocouples, pyrometers, thermometers and/or any other appropriate device. Feedback from the one or more temperature sensors can be utilized to control the amount of heat and/or energy applied to the target site 112 of the substrate material 110 such that its elevated preheat temperature is controlled. For example, such feedback can be utilized to control the amount of power to the preheating device, the distance between the preheating device and the target site 112, or any other variable that may affect the temperature of the target site 112 of the substrate material 110.

Depending on the condition of the substrate material 110, in some embodiments pretreating the target site 112 in step 15 can comprise cleaning the surface. For example, to allow for a high quality bond between the substrate material 110 and the filler material 211, the target site 112 can be cleaned of oxides and other non-metallic compounds. Cleaning may be performed in step 15 through, for example, pickling, hydrogen cleaning, fluoride ion cleaning or the like.

In even some embodiments, pretreating the target site 112 in step 15 can comprise excavating at least a portion of the substrate material at the target site 112. Excavating at least a portion of the substrate at the target site 112 can allow for the repair of a more geometric, consistent and/or otherwise accessible target site 112. Excavation of at least a portion of the substrate at the target site 112 in step 15 can occur through any operable method such as grinding, cutting, shaving, drilling or the like. Moreover, the excavation can be utilized to provide a target site of any geometric or non-geometric shape to facilitate the subsequent addition of filler material 211.

Referring now to FIGS. 1-4, the remote melt joining method 1 further comprises delivering the molten filler material 212 in a continuous stream to the target site 112 of the substrate material in step 20. Delivery of the molten filler material 212 in a continuous stream in step 20 refers to continuously applying the molten filler material 212 to the target site without stoppage or breaks. By applying all the filler material 212 to the target site 112 in a continuous stream (as opposed to in a plurality of application intervals with breaks between each application), the new material applied to the substrate material 110 can provide strong mechanical properties post solidification, and depending on the filler material 211 used (e.g., Renè^{™} 142), stronger mechanical properties than what could be used if melting the filler material 211 directly at the target site 112. Solidification of the molten filler material 212 can thereby occur through heat extraction into the cooler substrate material 110. The delivery of the molten filler material 212 in step 20 my cease by closing the gate 218 (or other flow control mechanism), by running out of molten filler material 212 to deliver and/or by moving the substrate material 110 and the remote melt joining system 200 away from one another. Furthermore, the molten filler material 212 may exit the remote storage and delivery vessel 210 at a flow distance D_{F} away from the target site 112 of the substrate material 110. The flow distance D_{F} and the flow rate can be coordinated such that the molten filler material 212 is delivered to the target site 112 of the substrate material 110 in a continuous stream (i.e., without forming distinct droplets or other interruptions between deliveries).

In some embodiments, delivering the molten filler material 212 to the target site 112 of the substrate material 110 causes a local portion of the substrate material 110 (i.e., a portion of the substrate material 110 that comes into contact with the molten filler material 212) at the target site 112 to temporarily melt. Specifically, the temperature of the molten filler material 212 temporarily raises the temperature of the local portion of the substrate material above its melting temperature so that the molten filler material 212 and the substrate material 110 bond together as they cool. In such embodiments, the resulting joint of the filler material 211 bonded with the substrate material 110 can be larger than the original gap.

The delivery of molten filler material 212 in a continuous stream in step 20 may thereby occur for any length of time necessary to apply the necessary amount of molten filler material 212 to the target site. The duration of delivery can depend, for example, on the flow rate of the molten filler material 212 and/or the size of the target site 112. Additionally, when melting the filler material 211 in step 10 occurs in a specific environment (e.g., inert atmosphere, vacuum, etc.), the delivery of the molten filler material 212 in a continuous stream in step 20 may similarly occur in the same or substantially similar environment.

### EXAMPLE

Two pieces of substrate material separated by a 1 mm gap were joined using the methods disclosed herein. The two pieces of substrate material each consisted of commercially available Renè^{™} N5 and were preheated to a temperature of 1200°C. The filler material used to join the two pieces of substrate material consisted of commercially available Renè^{™} 142. The filler material was heated to 1500°C to become molten at a remote distance away from the substrate material such that the substrate material did not rise above its solidus temperature. The molten filler material was then applied in a continuous stream to the 1 mm gap and allowed to cool.

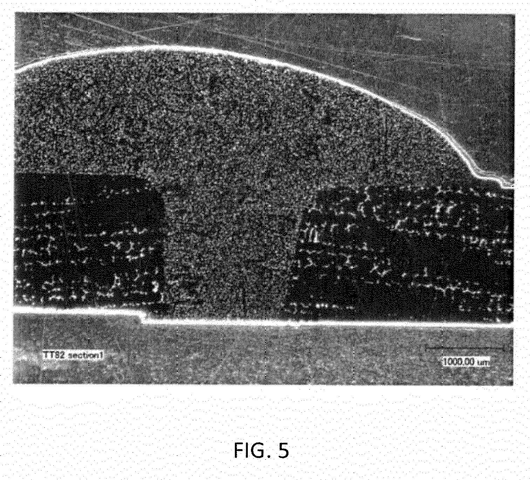

Microscopic analysis (presented in FIG. 5) verified consistent bonding between the substrate material and the filler material. Furthermore, as a result of localized temporary melting of the substrate material when it became in contact with the molten filler material, the bonding of the Renè^{™} 142 filler material with the Renè^{™} N5 substrate material extended to 2 mm.

It should now be appreciated that by melting the filler material remotely away from the target site of a substrate material, the heat used to melt the filler material will not provide a significant thermal impact on the substrate material (such as by altering its crystalline structure). This decoupling of the weld apparatus from the original substrate can allow for the addition of a high strength alloy (with a high melting temperature) that is the same or similar to the original substrate material. Moreover, by delivering the molten filler material in a continuous stream to the substrate material, and having it solidify due to its temperature differential with the substrate material, a high strength final joint may be produced that has mechanical properties that are the same as or substantially similar to the original substrate material.

The terms "a" and "an" herein do not denote a limitation of quantity, but rather denote the presence of at least one of the referenced item. The modifier "about" used in connection with a quantity is inclusive of the stated value and has the meaning dictated by the context, (e.g., includes the degree of error associated with measurement of the particular quantity). The suffix "(s)" as used herein is intended to include both the singular and the plural of the term that it modifies, thereby including one or more of that term (e.g., the metal(s) includes one or more metals).

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A remote melt joining (1) method comprising:
melting (10) a filler material (211) to produce a molten filler material, wherein melting the filler material (211) occurs at a remote distance away from a target site (112) of a substrate material (110) such that melting the filler material (211) maintains the target site (112) of the substrate material (110) below its solidus temperature; and,
delivering (20) the molten filler material (212) to the target site (112) of the substrate material (110) in a continuous stream.

2. The remote melt joining method of claim 1, further comprising pretreating (15) the target site (112) of the substrate material (110) prior to delivering (20) the molten filler material (212).

3. The remote melt joining method of claim 2, wherein pretreating (15) the target site (112) comprises preheating the target site (112) to a preheat temperature that is below its recrystallization temperature.

4. The remote melt joining method of claim 2 or 3, wherein pretreating (15) the target site (112) comprises excavating at least a portion of the substrate material (110) at the target site (112).

5. The remote melt joining method of any of claims 1 to 4, wherein melting (10) the filler material (211) occurs at the remote distance away from the target site (112) of a substrate material (110) such that melting the filler material (211) maintains the target site (112) of the substrate material (110) below its recrystallization temperature.

6. The remote melt joining method of any preceding claim, wherein delivering (20) the molten filler material (212) to the target site (112) of the substrate material causes a local portion of the substrate material (110) at the target site (112) to temporarily melt.

7. The remote melt joining method of any preceding claim, wherein at least one of the filler material (211) or the target site (112) of the substrate material (110) comprises a nickel based superalloy.

8. The remote melt joining method of any of claims 1 to 7, wherein the filler material (211) and the target site (112) of the substrate material (110) are a common material.

9. The remote melt joining method of any preceding claim, wherein the substrate material (110) comprises a hot gas path component for a turbine.

10. A remote melt joining system (200) for remotely melting a filler material (211) and delivering it to a target site (112) of a substrate material (110) in a continuous stream, the remote melt joining system (200) comprising:
a remote storage and delivery vessel (210) comprising a container (214) fluidly connected to a delivery feed (216), wherein the delivery feed (216) comprises an opening large enough for a continuous stream of molten filler material (212) to pass there through; and,
a remote melting apparatus (220) that melts the filler material (211) in the container (214) at a remote distance away from the substrate material (110) such that it maintains the substrate material (110) below its solidus temperature.

11. The remote melt joining system of claim 10, wherein the container (214) comprises a crucible.

12. The remote melt joining system of claim 10 or 11, wherein the delivery feed (216) comprises a tube or a spout.

13. The remote melt joining system of any of claims 10 to 12, wherein the remote storage and delivery vessel (210) further comprises a gate (218) that releasably stops the flow of molten filler material (212) from the opening (217) of the delivery feed (216).

14. The remote melt joining system of any of claims 10 to 13, wherein melting the filler material (211) in the container (214) at the remote distance away from the substrate material (110) maintains the substrate material (110) below its recrystallization temperature.

15. The remote melt joining system of any of claims 10 to 14, wherein at least one of the filler material (211) or the target site of the substrate material (110) comprises a nickel based superalloy.
